# EUROPEAN PATENT SPECIFICATION

(11) **EP 3 828 738 B1**
(45) Date of publication and mention of the grant of the patent: **21.08.2024**
(21) Application number: 19840156.4
(22) Date of filing: 17.05.2019
(51) Int. Cl.: H04L 9/40, G06F 21/12, G06F 21/44, G06F 21/62, H04W 12/08

(54) **CONTROL TERMINAL**
STEUERENDGERÄT
TERMINAL DE COMMANDE

(30) Priority: 24.07.2018 JP 2018138666
(43) Date of publication of application: 02.06.2021
(73) Proprietor: Yanmar Power Technology Co., Ltd., Osaka-shi Osaka 530-8311 (JP)
(72) Inventor: MURATA, Sosuke, Osaka-shi, Osaka 530-0014 (JP); YOKOYAMA, Kazuhisa, Osaka-shi, Osaka 530-0014 (JP); NAKAMURA, Keiji, Osaka-shi, Osaka 532-0003 (JP)
(74) Representative: Poindron, Cyrille
(86) International application number: PCT/JP2019/019808
(87) International publication number: WO 2020/021828

(56) References cited:
- JP-A- 2001 320 784
- JP-A- 2003 189 379
- JP-A- 2007 220 070
- US-A1- 2012 095 642
- US-A1- 2015 052 591
- US-A1- 2015 304 324
- US-A1- 2016 316 363

## Description

### TECHNICAL FIELD

This invention relates to a control terminal that is capable of having a wireless communication connection with an apparatus having unique identification information and is provided with multiple applications for controlling the apparatus.

### BACKGROUND ART

In Patent Literature 1, there is disclosed a system including an information processing device and a server device that distributes an application to the information processing device and permits or restricts the usage of the application in the information processing device. In the system described in Patent Literature 1, in a case where the user performs an app activation operation on the information processing device, the information processing device sends a usage-start request of the application, which includes the app ID and authentication information, to the server device. Upon receiving the usage-start request from the information processing device, the server device determines whether or not the application can be used, based on the app ID and authentication information included in the usage-start request, and notifies the information processing device of the determination result. The information processing device controls the execution of the application according to the determination result obtained from the server device. Document US 2012/095642 discloses a mobile terminal that communicates wirelessly with an in-vehicle device and accesses a data center for requesting specific applications. Document US 2015/304324 discloses a passenger of a vehicle that utilizes applications on his or her mobile device to wirelessly communicate with a system of the vehicle. Document US 2015/052591 discloses an authorization information output unit that is configured to output authorization key necessary for wireless communication between a mobile terminal and a working machine such as a tractor. Document US 2016/316363 discloses an appliance that can communicate wirelessly with a handset, wherein activation key and device identifiers are used in activation process.

### CITATION LIST

### Patent Literature

Patent Literature 1: Japanese Unexamined Patent Application Publication No. 2017-227991

### DISCLOSURE OF INVENTION

### PROBLEMS TO BE SOLVED BY THE INVENTION

For example, there is a work vehicle such as a tractor that has an autonomous traveling function. Generally, regarding such a work vehicle, applications used for causing the work vehicle to perform autonomous traveling are stored in a storage unit of a control terminal that is capable of having a wireless communication connection with the work vehicle. Further, in a case of performing autonomous traveling, the work vehicle autonomously travels while the control terminal and the work vehicle communicate wirelessly.

An object of this invention is to provide a control terminal which is provided with multiple applications for controlling an apparatus and with which the use of an application whose use for an apparatus that has a wireless communication connection with the control terminal is prohibited can be reliably prohibited in the control terminal.

### MEANS FOR SOLVING THE PROBLEMS

The invention is defined by the appended claims. The control terminal according to this invention is capable of having a wireless communication connection with an apparatus having unique identification information and is provided with a plurality of applications for controlling the apparatus, the control terminal including: a storage unit in which app use permission/prohibition information, which represents permission or prohibition of use of each of the plurality of applications in the apparatus, is stored in association with the identification information of the apparatus; and an app use control unit configured to receive the identification information of the apparatus from the apparatus each time a wireless communication connection with the apparatus is started and to control use of the plurality of applications, based on the app use permission/prohibition information stored in the storage unit in association with the received identification information.

In this configuration, it is possible to control the use of multiple applications provided in the control terminal, based on the app use permission/prohibition information, which is stored in association with the identification information of the apparatus that has a wireless communication connection with the control terminal. Therefore, the use of the applications whose use for the apparatus that has a wireless communication connection with the control terminal is prohibited can be reliably prohibited in the control terminal.

According to an embodiment of this invention, the control terminal is capable of controlling a plurality of apparatuses having unique identification information, respectively, and the app use permission/prohibition information, which are set in advance for the plurality of apparatuses, respectively, are stored in the storage unit in association with the identification information of the apparatuses, and, each time a wireless communication connection with given one of the plurality of apparatuses is started, the app use control unit receives the identification information of the apparatus from the apparatus and controls use of the plurality of applications, based on the app use permission/prohibition information stored in association with the received identification information among the plurality of app use permission/prohibition information stored in the storage unit.

According to an embodiment of this invention, the control terminal described in claim 1 or 2 further includes a permission/prohibition information registration processing unit configured to obtain for each of the apparatuses an activation key, which is generated by encrypting information including the app use permission/prohibition information which represents permission or prohibition of use of each of the plurality of applications in the apparatus and the identification information of the apparatus, to decrypt the obtained activation key, and to store the app use permission/prohibition information, which is obtained by the decryption, in the storage unit in association with the identification information, which is obtained by the decryption.

The above and/or other objects, characteristics and effects of the present invention will be made clear by the explanations of the embodiments described below with reference to the accompanying drawings.

### BRIEF DESCRIPTION OF DRAWINGS

FIG.1 is a schematic diagram illustrating a configuration of an app management system.
FIG.2 is a side view illustrating a work vehicle and a work machine mounted on the work vehicle, where the work machine is in a non-working state.
FIG.3 is a plan view of the work vehicle and the work machine.
FIG.4 is a side view illustrating the work vehicle and the work machine, where the work machine is in a working state.
FIG.5 is a block diagram illustrating an electrical configuration of the work vehicle.
FIG.6 is a block diagram illustrating an electrical configuration of a control terminal.
FIG.7 is a flowchart illustrating a procedure for generating an activation key from app restriction information.
FIG.8 is a flowchart illustrating a procedure of permission/prohibition information registration processing, which is executed by a permission/prohibition information registration processing unit.
FIG.9 is a flowchart illustrating a procedure of app use control processing, which is executed by an app use control unit.
FIG.10 is a schematic diagram illustrating an output characteristic map storage unit and a correction characteristic map storage unit provided in an engine controller.
FIG. 11 is a block diagram illustrating another example of the electrical configuration of the control terminal.
FIG. 12 is a schematic diagram for explaining an example of connecting the engine controller and the control terminal by use of a connection cable in a stage before the engine controller is mounted on the work vehicle, so as to control the writing of correction characteristic map to the engine controller.
FIG.13 is a schematic diagram illustrating a configuration example in which multiple correction characteristic maps are stored in the correction characteristic map storage unit provided in the engine controller.
FIG.14 is a schematic diagram for explaining an example of connecting the engine controller and the control terminal by use of a connection cable in a stage before the engine controller is mounted on the work vehicle, so as to control the switching of multiple correction characteristic maps stored in the engine controller.

### DESCRIPTION OF EMBODIMENTS

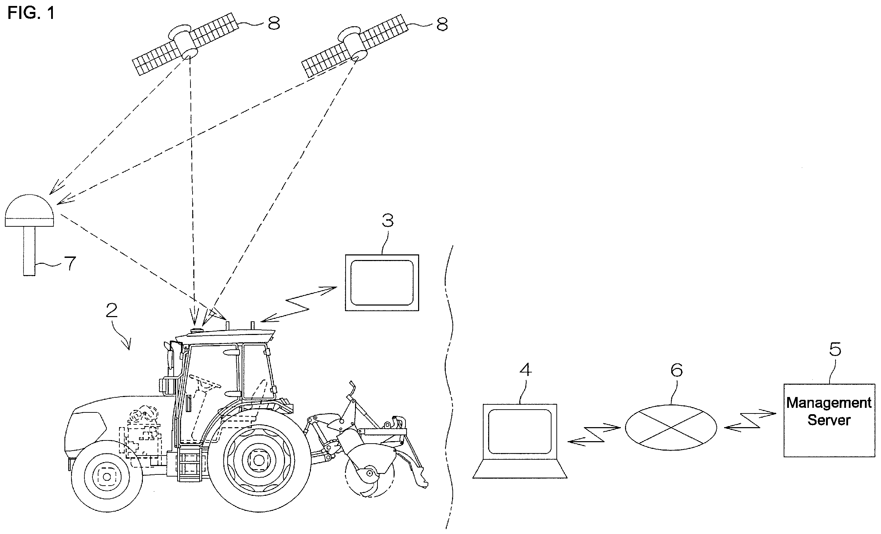

FIG.1 is a schematic diagram illustrating a configuration of an app management system to which a control terminal according to an embodiment of the present invention is applied.

The app management system 1 includes a work vehicle 2, a control terminal 3, a dealer PC (Personal Computer) 4, and a management server 5. In this embodiment, the work vehicle 2 is a tractor. The work vehicle 2 has a unique machine number (machine body number). The machine number is an example of identification information that is unique to an apparatus. The work vehicle 2 has a function of positioning the position of the work vehicle 2 by use of a reference station 7 and positioning satellites 8.

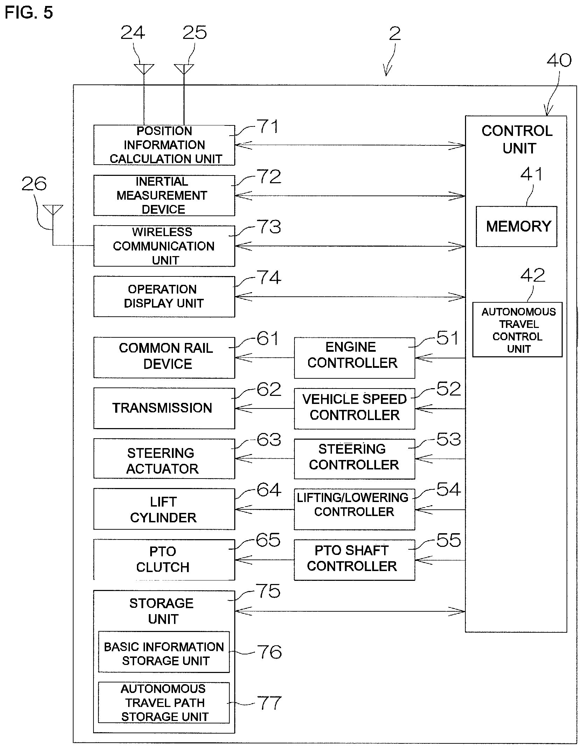

The work vehicle 2 is capable of performing autonomous traveling and manual traveling. The autonomous traveling means that the steering mechanism, etc., of the work vehicle 2 are controlled by the control unit 40 (see FIG.5) provided in the work vehicle 2, so that the work vehicle 2 travels along a preset autonomous travel path. The autonomous traveling includes an automatic mode, in which it is necessary for the driver to be aboard for performing the autonomous traveling, and a robot mode, in which it is not necessary for the driver to be aboard for performing the autonomous traveling. On the other hand, the manual traveling means that each mechanism provided in the work vehicle 2 is operated by the user so that the work vehicle 2 travels.

The control terminal 3 is configured with a portable terminal such as a smartphone or a tablet-type personal computer (tablet-type PC). The control terminal 3 is for remotely controlling the work vehicle 2 and is capable of performing wireless communication with the work vehicle 2.

Multiple applications for controlling the work vehicle 2 (hereinafter referred to as "vehicle control apps") are mounted on the control terminal 3. The vehicle control apps include an auto app, a robot app, a function adding app, or the like, as an application used for causing the work vehicle 2 to autonomously travel. The auto app is an app used for causing the work vehicle 2 to autonomously travel in the automatic mode.

The robot app includes an app used for causing the work vehicle 2 to autonomously travel in the robot mode (hereinafter may be referred to as a "robot-dedicated app") and an app used for causing the work vehicle 2 to autonomously travel in the automatic mode (auto app). Usually, robot-dedicated apps have more advanced safety functions, compared to auto apps. Note that, since auto apps or robot-dedicated apps for causing a work vehicle to autonomously travel are well known, the detailed explanations thereof will be omitted.

The function adding app is an app for adding a function to an auto app or a robot app.

In the following description, the information representing permission or prohibition of use in the work vehicle for each of the multiple vehicle control apps mounted on the control terminal 3 will be referred to as "app use permission/prohibition information".

Further, the data obtained by encrypting the information (the later-described app restriction information) including app use permission/prohibition information created for a given work vehicle 2 and the machine number of the work vehicle 2 will be referred to as an "activation key".

The dealer PC 4 is a personal computer installed at the dealer of the work vehicle 2. The dealer PC 4 is capable of communicating with the management server 5 via a communication network 6. The management server 5 is a server that creates, issues, and manages an activation key and provides a vehicle control app, etc.

The management server 5 provides the dealer PC 4 with a key creation web page, which is for creating an activation key for a work vehicle 2 that is sold. The person in charge of the dealer PC 4 inputs the information necessary for creating an activation key for the sold work vehicle 2 on the key creation web page. The management server 5 creates an activation key for the work vehicle 2, based on the information input by the person in charge of the dealer PC 4. In this embodiment, the activation key created by the management server 5 is provided (issued) to the dealer PC 4.

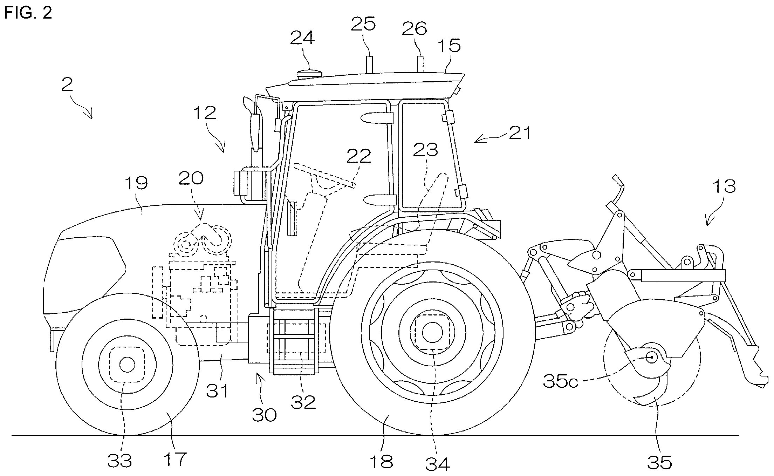

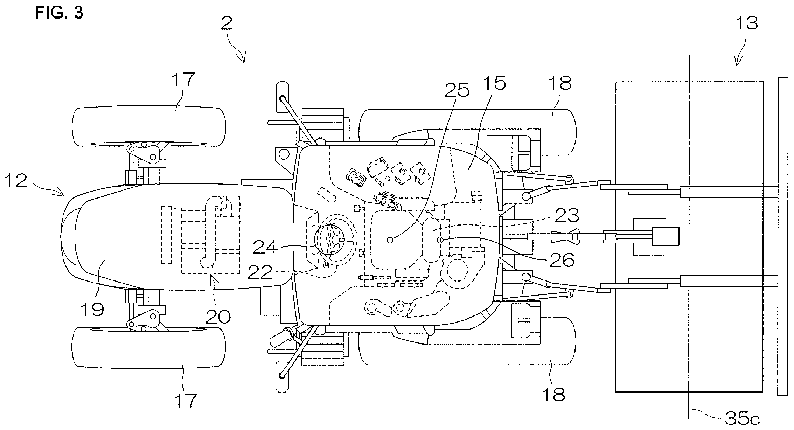

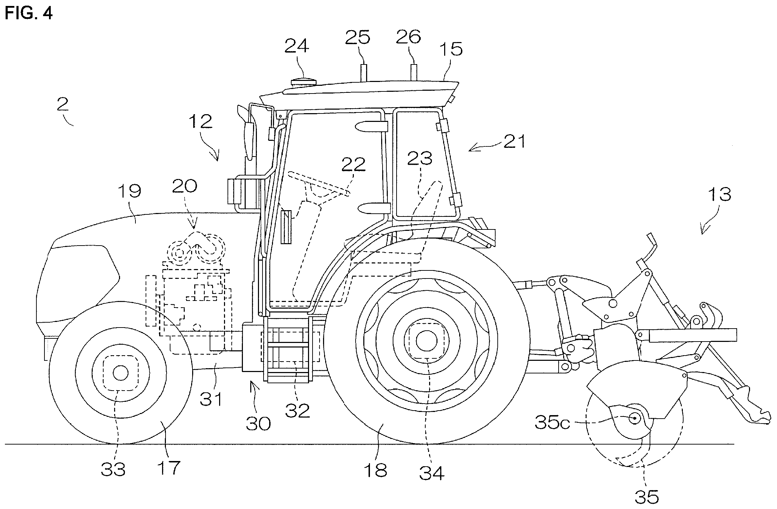

FIG.2 is a side view illustrating the work vehicle 2 and the work machine 13 mounted on the work vehicle 2, where the work machine 13 is in a non-working state. FIG.3 is a plan view of the work vehicle 2 and the work machine 13. FIG.4 is a side view illustrating the work vehicle 2 and the work machine 13, where the work machine 13 is in a working state.

The work vehicle 2 includes the travel machine body 12, which is a vehicle body part that travels in a field. On the travel machine body 12, various work machines such as a tiller, a plow, a fertilizer applicator, a mower, or a seeder can be selectively mounted, for example. In the present embodiment, a rotary tiller is mounted as the work machine 13.

The front part of the travel machine body 12 is supported by a left and right pair of front wheels 17, and the rear part of the travel machine body 12 is supported by a left and right pair of rear wheels 18.

A bonnet 19 is arranged at the front part of the travel machine body 12. In the present embodiment, an engine 20 which is the drive source of the work vehicle 2, a fuel tank (not illustrated in the drawing), etc., are housed in the bonnet 19. For example, this engine 20 can be configured with a diesel engine, but is not limited as such, and may be configured with, for example, a gasoline engine. In addition, as the drive source, an electric motor may be adopted instead of or in addition to the engine 20.

A cabin 21 for the user to board is arranged behind the bonnet 19. Inside this cabin 21, a steering handle 22 for the user to perform a steering operation, a seat 23 that the user can sit on, various operation devices for performing various kinds of operations, etc., are arranged.

On the roof 15 of the cabin 21, an antenna 24 for receiving satellite signals, an antenna 25 for receiving reference station signals, and an antenna 26 for wireless communication are installed. The antenna 24 for receiving satellite signals and the antenna 25 for receiving reference station signals are antennas used for calculating position information of the travel machine body 12. The antenna 26 for wireless communication is an antenna used for performing wireless communication with the control terminal 3.

The antenna 24 for receiving satellite signals is arranged above the steering handle 22. The antenna 25 for receiving reference station signals is arranged behind the antenna 24 for receiving satellite signals. The antenna 26 for wireless communication is arranged behind the antenna 25 for receiving reference station signals. Note that the arrangement positions of the antennas 24 to 26 are not limited as such, and, for example, it is also possible that the antennas 24 to 26 are arranged at the front part of the roof 15 with predetermined intervals in the width direction of the travel machine body 12.

The chassis 30 of the work vehicle 2 is disposed at the lower part of the travel machine body 12. The chassis 30 is configured with a machine body frame 31, a transmission 32, a front axle 33, a rear axle 34, etc.

The machine body frame 31 is a support part at the front part of the work vehicle 2, and the machine body frame 31 supports the engine 20 directly or via an anti-vibration member or the like. The transmission 32 transforms the power from the engine 20 to transmit the power to the front axle 33 and the rear axle 34. The front axle 33 transmits the power input from the transmission 32 to the front wheels 17. The rear axle 34 transmits the power input from the transmission 32 to the rear wheels 18.

The work machine 13 is mounted on the rear part of the travel machine body 12 of the work vehicle 2. By transmitting a part of the driving force of the engine 20 to the work machine 13 via a PTO shaft, which is not illustrated in the drawing, it is possible to drive the work machine 13 so as to perform a tillage work. At the lower part of the work machine 13, multiple tillage claws (work bodies) 35, which are rotationally driven about a shaft 35c that is horizontally arranged, are disposed.

By lowering this work machine 13 to the working height illustrated in FIG.4, the rotating tillage claws 35 come into contact with the soil, so that the tillage work of the field can be performed at a predetermined depth corresponding to the working height. In addition, the tillage work can be stopped by stopping the rotation of the tillage claws 35 or lifting the work machine 13 to the non-working height illustrated in FIG.2.

FIG.5 is a block diagram illustrating an electrical configuration of the work vehicle 2.

The work vehicle 2 includes the control unit 40. The control unit 40 controls the operation of the travel machine body 12 (operation such as forward traveling, reverse traveling, stopping, and turning) and the operation of the work machine 13 (operation such as lifting/lowering, driving, and stopping). To the control unit 40, multiple controllers for controlling the respective units of the work vehicle 2 are electrically connected. The multiple controllers include an engine controller 51 that controls the rotational speed, etc., of the engine (not illustrated in the drawing), a vehicle speed controller 52 that controls the vehicle speed of the work vehicle, a steering controller 53 that controls the steering angle of the front wheels 17 of the work vehicle 2, a lifting/lowering controller 54 that controls lifting/lowering of the work machine 13, a PTO controller 55 that controls the rotation of the PTO shaft, etc.

The engine controller 51 is for controlling the rotational speed, etc., of the engine 20 by controlling the common rail device 61. The common rail device 61 is a fuel injection device that injects fuel into each cylinder of the engine 20.

The vehicle speed controller 52 is for controlling the vehicle speed of the work vehicle 2 by controlling the transmission 62.

The steering controller 53 is for controlling the steering angle of the front wheels 17 of the work vehicle 2. Specifically, a steering actuator 63 is disposed in the middle part of the rotation shaft (steering shaft) of the steering handle 22. During the autonomous traveling, the control unit 40 calculates a target steering angle for causing the work vehicle 2 to travel along a predetermined autonomous travel path and sets the target steering angle in the steering controller 53. The steering controller 53 controls the steering actuator 63 so that the rotation angle of the steering handle 22 becomes the target steering angle. In this way, the steering angle of the front wheels 17 of the work vehicle 2 is controlled.

The lifting/lowering controller 54 is for controlling the lifting/lowering of the work machine 13. The lifting/lowering controller 54 lifts and lowers the work machine 13 by driving and controlling a lift cylinder 64 for lifting and lowering the work machine 13, based on a lifting/lowering control signal which is provided from the control unit 40.

The PTO controller 55 is for controlling the rotation of the PTO shaft. Specifically, the work vehicle 2 includes a PTO clutch 65 for switching transmission and disconnection of the power to the PTO shaft (power transmission shaft). The PTO controller 55 is capable of switching the PTO clutch 65, based on a control signal which is input from the control unit 40, so as to drive the work machine 13 to rotate or stop the work machine 13 via the PTO shaft.

Further, a position information calculation unit 71, an inertial measurement device 72, a wireless communication unit 73, an operation display unit 74, a storage unit 75, etc., are connected to the control unit 40.

The position information calculation unit 71 calculates the position information of the work vehicle 2, based on a satellite positioning system. The satellite positioning system is, for example, RTK(Real Time Kinematic)-GNSS(Global Navigation Satellite System). In RTK-GNSS (Real Time Kinematic GNSS), the reference station 7 (see FIG.1) that is installed at a predetermined position is utilized. At a predetermined time interval, the reference station 7 calculates the difference between the positioning information of the reference station 7, which is calculated based on GNSS satellite signals received from multiple positioning satellites 8 (see FIG.1), and the self-position (recognized self-position), which is recognized in advance, so as to send the difference information as a positioning correction signal.

The antenna 24 for receiving satellite signals receives satellite signals from the positioning satellites 8. The antenna 25 for receiving reference station signals receives positioning correction information from the reference station 7. The position information calculation unit 71 obtains satellite signals from multiple GNSS satellites via the antenna 24 for receiving satellite signals. Further, the position information calculation unit 71 obtains positioning correction information from the predetermined reference station 7 via the antenna 25 for receiving reference station signals. The position information calculation unit 71 calculates positioning information of the work vehicle 2, based on satellite signals obtained from multiple positioning satellites, and calculates the position information representing the position of the work vehicle 2 by correcting the obtained positioning information of the work vehicle 2 by use of the positioning correction information obtained from the reference station 7. Position information is configured with, for example, latitude, longitude, and altitude information.

The inertial measurement device 72 is a measurement unit capable of measuring the posture (orientation), acceleration, etc., of the work vehicle 2.

The wireless communication unit 73 is a communication interface for the control unit 40 to communicate with the control terminal 3. For example, the wireless communication unit 73 is configured with a wireless LAN router (Wi-Fi (registered trademark) router). The antenna 26 for wireless communication is connected to the wireless communication unit 73.

For example, the operation display unit 74 is configured with a touchscreen type display.

The storage unit 75 is configured with a storage device such as a hard disk, a non-volatile memory, or the like. In the storage unit 75, a basic information storage unit 76, an autonomous travel path storage unit 77, etc., are provided. The model number, model name, machine number, etc., are stored in the basic information storage unit 76. The autonomous travel path storage unit 77 stores an autonomous travel path, which is generated by the control terminal 3.

The control unit 40 includes a microcomputer provided with a CPU and a memory (ROM, RAM, non-volatile memory, etc.) 41. The control unit 40 includes an autonomous travel control unit 42, etc.

By controlling various kinds of controllers 51 to 55, the autonomous travel control unit 42 causes the work vehicle 2 to autonomously travel along an autonomous travel path, which is generated in advance, and to stop autonomous traveling. Further, the autonomous travel control unit 42 wirelessly communicates with the control terminal 3 via the wireless communication unit 73.

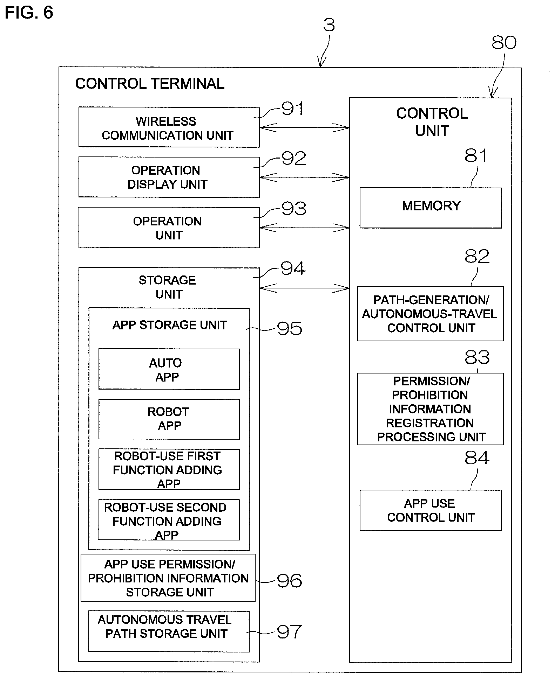

FIG.6 is a block diagram illustrating an electrical configuration of the control terminal 3.

The control terminal 3 includes the control unit 80. A wireless communication unit 91, an operation display unit 92, an operation unit 93, a storage unit 94, etc., are connected to the control unit 80.

The wireless communication unit 91 is a communication interface for the control terminal 3 to communicate with the control unit 40 of the work vehicle 2. For example, the wireless communication unit 91 is configured with a wireless LAN adapter (Wi-Fi adapter).

The operation display unit 92 is for displaying various kinds of data and accepting operations by the user. For example, the operation display unit 92 is configured with a touchscreen type display. The operation unit 93 includes, for example, one or more operation buttons.

The storage unit 94 is configured with a storage device such as a non-volatile memory. An app storage unit 95, an app use permission/prohibition information storage unit 96, an autonomous travel path storage unit 97, etc., are provided in the storage unit 94.

Various kinds of applications are stored in the app storage unit 95. The various kinds of applications include multiple vehicle control apps. In this embodiment, for convenience of explanation, it is assumed that the multiple vehicle control apps include an auto app, a robot app, a first function adding app for the robot app, and a second function adding app for the robot app.

An explanation is given of specific examples of the first function adding app and the second function adding app. The robot app has a function of displaying a path display screen, which includes the planned travel path and the current position of the work vehicle, on the operation display unit 92 during autonomous traveling. Further, the robot app has a function of obtaining the position information of the work vehicle 2 while the work vehicle 2 is made to travel along the circumference of the field by manual drive so as to recognize the outline of the field, based on the obtained position information.

The first function adding app is, for example, an application for adding a function of marking the area for which the work has been completed by the work vehicle 2 on the path display screen which is displayed during autonomous traveling. The second function adding app is, for example, an application for adding a function for improving the recognition accuracy of the outline of the field.

The app use permission/prohibition information storage unit 96 stores the app use permission/prohibition information for the work vehicle 2 in association with the machine number of the work vehicle 2.

The autonomous travel path storage unit 97 stores an autonomous travel path, which is generated by the control unit 80.

The control unit 80 includes a microcomputer provided with a CPU and a memory (ROM, RAM, non-volatile memory, etc.) 81. The control unit 80 includes a path-generation/autonomous-travel control unit 82, a permission/prohibition information registration processing unit 83, an app use control unit 84, etc.

The path-generation/autonomous-travel control unit 82 generates an autonomous travel path, accepts various kinds of settings for autonomous traveling, communicates with the control unit 40 of the work vehicle 2, etc., based on the auto app, the robot app, etc.

The permission/prohibition information registration processing unit 83 obtains an activation key and decrypts the obtained activation key. Then, the permission/prohibition information registration processing unit 83 stores the app use permission/prohibition information obtained by decrypting the activation key in the app use permission/prohibition information storage unit 96 in association with the identification information obtained by decrypting the activation key.

In this embodiment, when the control terminal 3 starts a wireless communication connection with the work vehicle 2 under a predetermined condition, the app use control unit 84 receives the machine number of the work vehicle 2 from the work vehicle 2 and controls the use of applications for the work vehicle 2, based on the app use permission/prohibition information stored in the storage unit 96 in association with the received machine number. In this embodiment, the predetermined condition is that, among multiple vehicle control apps, an activation operation of a predetermined application is performed. More specifically, the predetermined condition is that an activation operation of the auto app is performed. In addition, it is also possible that the predetermined condition is a condition that an activation operation of a predetermined application other than the multiple vehicle control apps is performed.

In the following description, an explanation is given of a method for creating an activation key and operation of the control terminal 3. First, a method for creating an activation key will be explained.

The person in charge at the dealer that sold the work vehicle 2 operates the dealer PC 4 in order to obtain the key creation web page, which is provided by the management server 5. On the key creation web page, an information input section for inputting information required for creating an activation key for the work vehicle 2, an issuance request button for requesting for issuance of an activation key, etc., are displayed. The person in charge at the dealer inputs the required information on the key creation web page and then presses the issuance request button.

For example, the information required for creating an activation key includes "work vehicle model", "work vehicle machine number", "key expiration date", and "app use permission/prohibition information". The work vehicle model is, for example, information indicating a tractor, a rice transplanter, a combine, etc. The key expiration date is, for example, the number of days from the issuance of the activation key to the expiration date.

The app use permission/prohibition information includes "auto/robot permission/prohibition information", which represents which of the auto app and the robot app is permitted, and "function addition permission/prohibition information", which is permission/prohibition information for the use of a function adding app. For example, "0" is set as the function addition permission/prohibition information in a case where the uses of both of the first function adding app and the second function adding app are prohibited, "101" is set in a case where only the use of the first function adding app is permitted, "102" is set in a case where only the use of the second function adding app is permitted, and "103" is set in a case where the uses of both of the first function adding app and the second function adding app are permitted, respectively.

Information including a work vehicle model, a work vehicle machine number, auto/robot permission/prohibition information, and function addition permission/prohibition information is referred to as "app restriction information". Each of the work vehicle model, work vehicle machine number, auto/robot permission/prohibition information, and function addition permission/prohibition information are configured with numeric value information. Therefore, the app restriction information is configured with a numeric string.

In a case where app restriction information is input on the key creation web page and the issuance request button is pressed, the management server 5 obtains the app restriction information. Further, the management server 5 generates an activation key for the work vehicle 2 by encrypting the app restriction information and sends a key issuance screen, which includes the activation key, a save button, a close button, etc., to the dealer PC 4. Accordingly, the key issuance screen including the activation key is displayed on the dealer PC 4, so that the person in charge at the dealer presses the save button to store the activation key in a storage unit (for example, hard disk) of the dealer PC 4.

Thereafter, for example, when the work vehicle 2 is delivered, the person in charge at the dealer prints the activation key stored in the storage unit of the dealer PC 4 and gives a document on which the activation key is printed to the user.

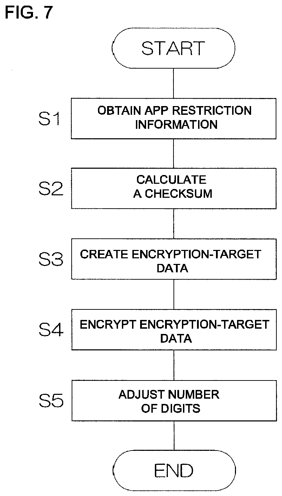

FIG.7 is a flowchart illustrating a procedure for creating an activation key from app restriction information.

Upon obtaining app restriction information (Step S1), the management server 5 calculates a checksum based on the app restriction information (Step S2). Specifically, for example, the numeric value information configuring each kind of information (the work vehicle model, work vehicle machine number, auto/robot permission/prohibition information, and function addition permission/prohibition information) included in the app restriction information are summed up, and the least significant numeric value of the result of the sum is used as the checksum.

Next, the management server 5 creates encryption-target data by adding the checksum to the app restriction information, for example (Step S3).

Next, the management server 5 encrypts the encryption-target data (Step S4). Next, the management server 5 adjusts the number of digits so that the number of digits of the obtained ciphertext becomes a predetermined number of digits (for example, 16) (Step S5). Thereby, an activation key is generated.

For example, when the work vehicle 2 is delivered to the user, who is the purchaser, the person in charge at the dealer prints the activation key stored in the storage unit of the dealer PC 4 and gives the document on which the activation key is printed (hereinafter referred to as the key-printed document) to the user. When the user receives the key-printed document from the person in charge at the dealer, the user operates the control terminal 3 to display the activation key input screen and inputs the activation key on the activation key input screen.

Next, the operation of the control terminal 3 will be explained.

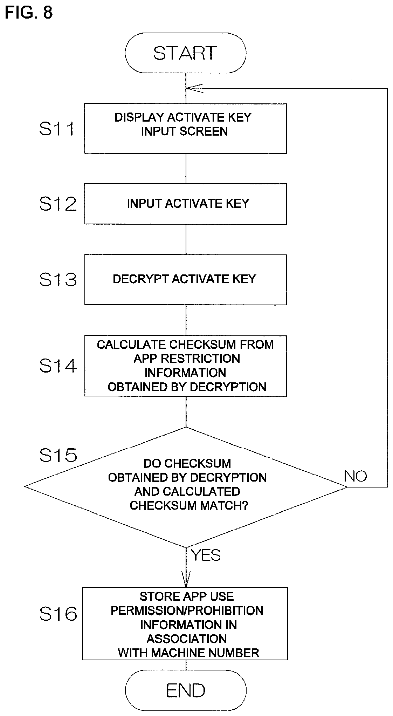

FIG.8 is a flowchart illustrating a procedure of permission/prohibition information registration processing, which is executed by the permission/prohibition information registration processing unit 83.

When the user performs the operation for displaying the activation key input screen on the control terminal 3, the permission/prohibition information registration processing unit 83 causes the operation display unit 92 to display the activation key input screen (Step S11). The user inputs the activation key on the activation key input screen.

When the activation key is input (Step S12), the permission/prohibition information registration processing unit 83 decrypts the activation key (Step S13). Thereby, the app restriction information and the checksum are obtained.

Next, the permission/prohibition information registration processing unit 83 calculates a checksum from the app restriction information obtained by decrypting the activation key (Step S14). Then, the permission/prohibition information registration processing unit 83 determines whether or not the checksum obtained by decrypting the activation key and the checksum calculated in Step S14 match (Step S15).

In a case where the checksums do not match (Step S15: NO), the permission/prohibition information registration processing unit 83 returns to Step S11. Here, it is preferable to display a message on the activation key input screen to indicate that the decryption failed and to prompt to input the activation key again.

In a case where it is determined in Step S15 that the checksums match (Step S15: YES), the permission/prohibition information registration processing unit 83 proceeds to Step S16.

In Step S16, the permission/prohibition information registration processing unit 83 stores the app use permission/prohibition information, which is included in the app restriction information obtained by decrypting the application key, in the app use permission/prohibition information storage unit 96 in association with the machine number included in the app restriction information.

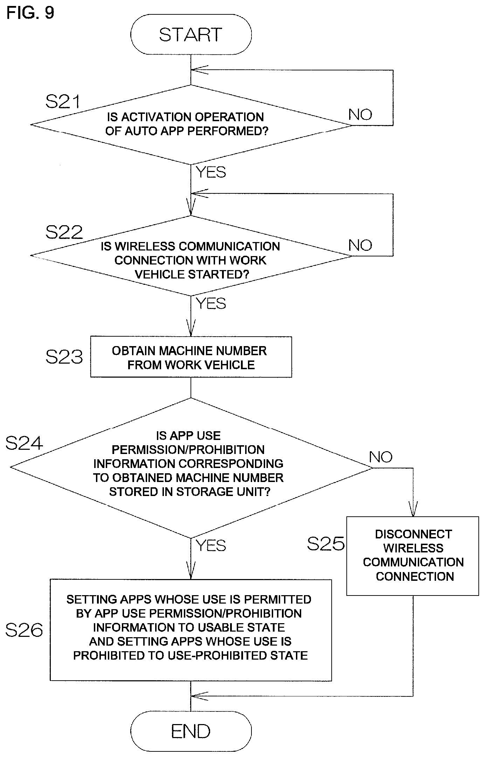

FIG.9 is a flowchart illustrating a procedure of the app use control processing, which is executed by the app use control unit 84. Here, it is assumed that the app use permission/prohibition information storage unit 96 stores app use permission/prohibition information.

In this embodiment, the vehicle control app is usable only in a case where the app is set to the usable state by the app use control unit 84.

When the activation operation of the auto app is performed (Step S21), the app use control unit 84 stands by for the control terminal 3 to start a wireless communication connection (Wi-Fi communication connection) with the work vehicle 2 (Step S22).

In a case where the control terminal 3 starts a wireless communication connection with the work vehicle 2 (Step S22: YES), the app use control unit 84 communicates with the control unit 40 of the work vehicle 2 and obtains the machine number of the work vehicle 2 from the control unit 40 (Step S23).

Next, the app use control unit 84 determines whether or not the app use permission/prohibition information corresponding to the machine number obtained in Step S23 (hereinafter referred to as "machine number corresponding permission/prohibition information") is stored in the app use permission/prohibition information storage unit 96 (Step S24).

In a case where the machine number corresponding permission/prohibition information is not stored in the app use permission/prohibition information storage unit 96 (Step S24: NO), the app use control unit 84 disconnects the wireless communication connection between the control terminal 3 and the control unit 40 (Step S25).

In a case where it is determined in Step S24 that the machine number corresponding permission/prohibition information is stored in the app use permission/prohibition information storage unit 96 (Step S24: YES), the app use control unit 84 proceeds to Step S26.

In Step S26, of the multiple vehicle control apps stored in the app storage unit 95, the app use control unit 84 sets the apps whose use is permitted by the machine number corresponding permission/prohibition information to the usable state and sets the apps whose use is prohibited by the machine number corresponding permission/prohibition information to the use-prohibited state. Therefore, until the wireless communication connection is disconnected, the control of the work vehicle 2 by the apps that are set to the usable state is enabled, but the control of the work vehicle 2 by the apps that are set to the use-prohibited state is prohibited.

When the current wireless communication connection is disconnected (including when the power source of the control terminal 3 is turned off), all vehicle control apps are set to the use-prohibited state. Therefore, in order to use a vehicle control app after the wireless communication connection is disconnected, the user needs to activate the auto app and make the app use control unit 84 execute the app use control processing again.

In the above-described embodiment, the use of multiple vehicle control apps mounted on the control terminal 3 can be controlled based on the app use permission/prohibition information stored in association with the machine number of the work vehicle 2 that has wireless communication connection with the control terminal 3. Therefore, the use of the vehicle control apps whose use for the work vehicle 2 that has wireless communication connection with the control terminal 3 is prohibited can be reliably prohibited in the control terminal 3.

In the above-described embodiment, the explanation is given of the case of controlling the use of multiple vehicle control apps mounted on the control terminal 3. Hereinafter, an embodiment of the case of controlling the use of correction characteristic data (correction characteristic map) for correcting the operation of the common rail device 61 (fuel injection device) will be explained.

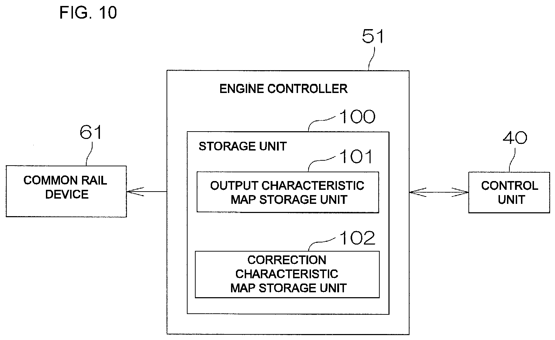

In this embodiment also, the electrical configuration of the work vehicle 2 is almost the same as the electrical configuration of the work vehicle 2 of the above-described embodiment, which is illustrated in FIG.5. As illustrated in FIG. 10, an output characteristic map storage unit 101 and a correction characteristic map storage unit 102 are provided in the storage unit 100 of the engine controller 51 of the work vehicle 2. The output characteristic map storage unit 101 stores an output characteristic map M0 as output characteristic data, which indicates the relationship between the rotation speed and the torque of the engine 20 (see FIG.2). The engine controller 51 basically calculates a target fuel injection amount by use of the engine rotation speed and torque and output characteristic data, so as to control the common rail device 61, based on the calculated target fuel injection amount.

The correction characteristic map storage unit 102 is a storage unit for storing a correction characteristic map for correcting the operation of the common rail device 61. The correction characteristic map also indicates the relationship between the rotation speed and torque of the engine 20 but has characteristics different from the output characteristic map. In a case where a correction characteristic map is written in the correction characteristic map storage unit 102, the engine controller 51 calculates a target fuel injection amount, based on the engine rotation speed and torque, output characteristic data, and correction characteristic map, so as to control the common rail device 61, based on the calculated target fuel injection amount (see, for example, Japanese Unexamined Patent Application Publication No. 2011-64160).

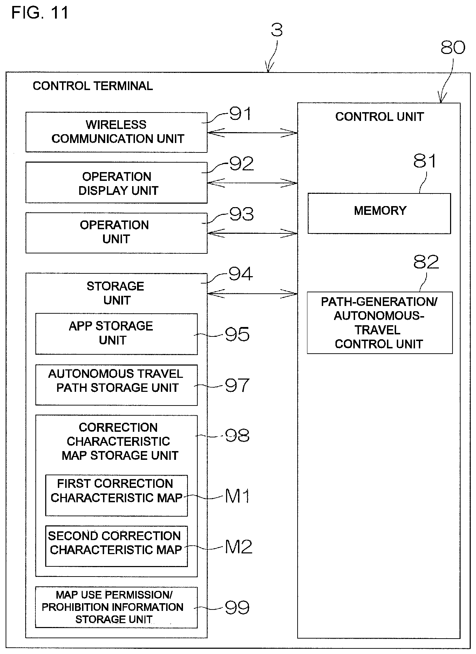

FIG. 11 is a block diagram illustrating an electrical configuration of the control terminal 3. In FIG. 11, the parts corresponding to the respective parts of FIG.6 described above are indicated by assigning the same reference numerals as those of FIG.6.

In this embodiment, the storage unit 94 of the control terminal 3 is provided with an app storage unit 95, an autonomous travel path storage unit 97, a correction characteristic map storage unit 98, a map use permission/prohibition information storage unit 99, etc.

The correction characteristic map storage unit 98 stores one or more correction characteristic maps. In this embodiment, the first correction characteristic map M1 and the second correction characteristic map M2 are stored in the correction characteristic map storage unit 98.

In the map use permission/prohibition information storage unit 99, the map use permission/prohibition information, which represents permission or prohibition of the use in the work vehicle 2 for each of the one or more correction characteristic maps that are stored in the correction characteristic map storage unit 98, is stored in association with the machine number of the work vehicle 2. In the map use permission/prohibition information storage unit 99 of this embodiment, the map use permission/prohibition information representing permission or prohibition of the use in the work vehicle 2 for each of the first correction characteristic map M1 and the second correction characteristic map M2 is stored in association with the machine number of the work vehicle 2.

For example, the method for storing the map use permission/prohibition information in the map use permission/prohibition information storage unit 99 is the same as the method for storing the above-described app use permission/prohibition information in the app use permission/prohibition information storage unit 96.

It is assumed that the control unit 80 of the control terminal 3 and the control unit 40 of the work vehicle 2 can have a wired communication connection by use of a connection cable.

In a case where the user wants to use either the first correction characteristic map M1 or the second correction characteristic map M2 for engine control, the user connects the control unit 80 of the control terminal 3 to the control unit 40 of the work vehicle 2 by use of a connection cable. In a case where the control unit 80 of the control terminal 3 and the control unit 40 are connected via a wired communication, the user activates a map writing app, which is mounted on the control terminal 3. The map writing app is an application for writing a correction characteristic map to the correction characteristic map storage unit 98 in the engine controller 51.

In a case where the map writing app is activated, the control unit 80 of the control terminal 3 communicates with the control unit 40 and obtains the machine number of the work vehicle 2 from the control unit 40.

The control unit 80 determines whether or not the map use permission/prohibition information storage unit 99 stores the map use permission/prohibition information corresponding to the obtained machine number. In a case where the map use permission/prohibition information corresponding to the obtained machine number is not stored in the map use permission/prohibition information storage unit 99, the control terminal 3 ends the correction characteristic map writing app.

On the other hand, in a case where the map use permission/prohibition information corresponding to the obtained machine number is stored in the map use permission/prohibition information storage unit 99, the control unit 80 displays a list of writable correction characteristic maps (correction characteristic maps that can be used in the work vehicle 2 which is connected via a wired communication), based on the map use permission/prohibition information. The user selects the correction characteristic map to be written from the displayed list.

In a case where the correction characteristic map to be written is selected by the user, the control unit 80 sends the correction characteristic map to the control unit 40 together with a write command. In a case where the control unit 40 receives the correction characteristic map and the write command from the control unit 80, the control unit 40 writes the received correction characteristic map to the correction characteristic map storage unit 102. Here, in a case where correction characteristic map has already been stored in the correction characteristic map storage unit 102, the already stored correction characteristic map is overwritten with the correction characteristic map received this time. Accordingly, since the correction characteristic map received this time is written in the correction characteristic map storage unit 102, the correction characteristic map written in the engine control this time will thereafter be used for engine control together with the output characteristic map.

With FIG. 10 and FIG. 11, the explanation has been given of the case in which the control unit 40 in the work vehicle 2 and the control terminal 3 are connected by use of a connection cable so as to control the writing of a correction characteristic map to the engine controller 51 mounted on the work vehicle 2.

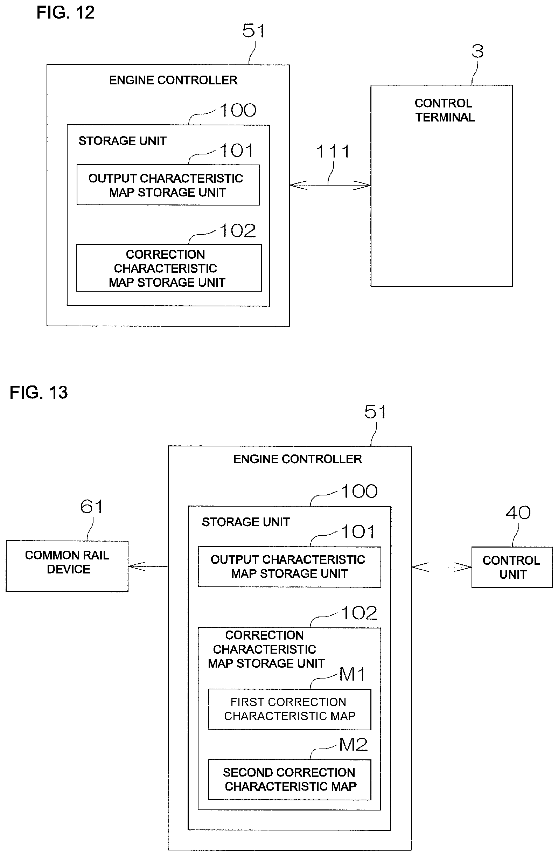

However, as illustrated in FIG. 12, it is also possible to connect the engine controller 51, which is for controlling a specific engine, and the control terminal 3 by use of the connection cable 111 in a stage before the engine controller 51 is mounted on the work vehicle 2, so as to control the writing of a correction characteristic map to the engine controller 51.

In this case, map use permission/prohibition information representing permission or prohibition of the use of each of the multiple correction characteristic maps, which are stored in the correction map storage unit 98, is stored in the map use permission/prohibition information storage unit 99 (see FIG. 11) of the control terminal 3 in association with the machine number of the engine that should be controlled by the engine controller 51. In a case where the map writing app is activated in a state where the control terminal 3 is connected to the engine controller 51, the control terminal 3 communicates with the engine controller 51 and obtains the machine number of the engine that should be controlled by the engine controller 51 from the engine controller 51.

In a case where the map use permission/prohibition information corresponding to the obtained machine number is not stored in the map use permission/prohibition information storage unit 99 (see FIG. 11), the control terminal 3 ends the map writing app. On the other hand, in a case where the map use permission/prohibition information corresponding to the obtained machine number is stored in the map use permission/prohibition information storage unit 99, the control terminal 3 displays a list of the writable correction characteristic maps, based on the map use permission/prohibition information. In a case where the correction characteristic map to be written is selected by the user, the control terminal 3 sends the correction characteristic map to the engine controller 51 together with a write command. The engine controller 51 writes the received correction characteristic map to the correction characteristic map storage unit 102.

In the configuration of above-described example, only one correction characteristic map is written to the correction characteristic map storage unit memory 102 in the engine controller 51, and the one correction characteristic map written in the correction characteristic map storage unit memory 102 is used for engine control together with the output characteristic map.

However, there may be such a configuration in which multiple correction characteristic maps are stored in the correction characteristic map storage unit memory 102, and one of the multiple correction characteristic maps is set as an effective correction characteristic map that is used for engine control. An explanation is given of an embodiment of a case in which the control terminal 3 provides an instruction for switching the correction characteristic map to be used for engine control in such a configuration.

Here, for convenience of explanation, it is assumed that the first correction characteristic map M1 and the second correction characteristic map M2 are stored in the correction characteristic map storage unit memory 102 as illustrated in FIG. 13. Further, it is assumed that the first correction characteristic map M1 is set as the correction characteristic map to be used for the engine control.

In this embodiment also, the electrical configuration of the control terminal 3 is almost the same as the configuration illustrated in FIG. 11, but it is not necessary that the correction characteristic map storage unit 98 is provided in the storage unit 94 of the control terminal 3. As illustrated in FIG. 11, in the map use permission/prohibition information storage unit 99 of the control terminal 3, the map use permission/prohibition information representing permission or prohibition of the use in the work vehicle 2 for each of the first correction characteristic map M1 and the second correction characteristic map M2 is stored in association with the machine number of the work vehicle 2.

In a case where the user wants to change the correction characteristic map to be used for engine control (effective correction characteristic map), the user connects the control unit 80 of the control terminal 3 to the control unit 40 of the work vehicle 2 by use of a connection cable. In a case where the control unit 80 of the control terminal 3 and the control unit 40 are connected via a wired communication, the user activates a map switching app, which is mounted on the control terminal 3. The map switching app is an application for switching the correction characteristic map. In a case where the map switching app is activated, the control unit 80 of the control terminal 3 communicates with the control unit 40 and obtains the machine number of the work vehicle 2 from the control unit 40.

The control unit 80 determines whether or not the map use permission/prohibition information storage unit 99 stores the map use permission/prohibition information corresponding to the obtained machine number. In a case where the map use permission/prohibition information corresponding to the obtained machine number is not stored in the map use permission/prohibition information storage unit 99, the control unit 80 ends the map switching app.

On the other hand, in a case where the map use permission/prohibition information corresponding to the obtained machine number is stored in the map use permission/prohibition information storage unit 99, the control unit 80 displays a list of the usable correction characteristic maps, based on the map use permission/prohibition information. The user selects the correction characteristic map to be used for engine control from the displayed list.

In a case where the correction characteristic map to be used for engine control is selected, the control unit 80 sends a map switching command including the map ID of the selected correction characteristic map to the control unit 40. Upon receiving this map switching command, the control unit 40 sets the correction characteristic map corresponding to the map ID included in the map switching command as the effective correction characteristic map. Therefore, the correction characteristic map that is set as the effective correction characteristic map this time will thereafter be used for controlling the engine together with the output characteristic map.

With FIG. 11 and FIG.13, the explanation has been given of the case in which the control unit 40 in the work vehicle 2 and the control terminal 3 are connected by use of a connection cable so as to control the switching of the multiple correction characteristic maps stored in the engine controller 51 mounted on the work vehicle 2.

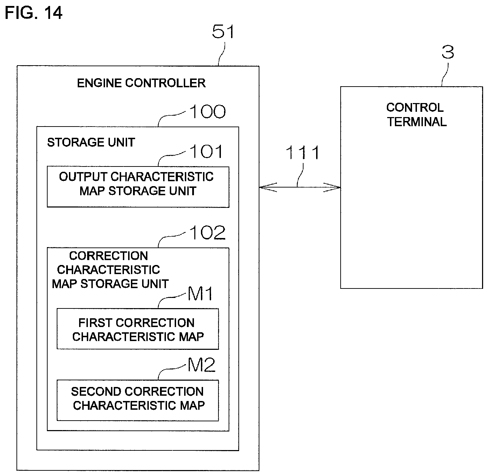

However, as illustrated in FIG.14, it is also possible to connect the engine controller 51, which is for controlling a specific engine, and the control terminal 3 by use of the connection cable 111 in a stage before the engine controller 51 is mounted on the work vehicle 2, so as to control the switching of the multiple correction characteristic maps stored in the engine controller 51.

In this case, map use permission/prohibition information representing permission or prohibition of the use of each of the multiple correction characteristic maps, which are stored in the correction map storage unit 98, is stored in the map use permission/prohibition information storage unit 99 (see FIG. 11) of the control terminal 3 in association with the machine number of the engine that should be controlled by the engine controller 51. In a case where the map switching app is activated in a state where the control terminal 3 is connected to the engine controller 51, the control terminal 3 communicates with the engine controller 51 and obtains the machine number of the engine that should be controlled by the engine controller 51 from the engine controller 51.

In a case where the map use permission/prohibition information corresponding to the obtained machine number is not stored in the map use permission/prohibition information storage unit 99 (see FIG. 11), the control terminal 3 ends the map switching app. On the other hand, in a case where the map use permission/prohibition information corresponding to the obtained machine number is stored in the map use permission/prohibition information storage unit 99, the control terminal 3 displays a list of the usable correction characteristic maps, based on the map use permission/prohibition information. In a case where the correction characteristic map to be used for engine control is selected by the user, the control terminal 3 sends a map switching command including the map ID of the correction characteristic map to the engine controller 51. The engine controller 51 sets the correction characteristic map corresponding to the map ID included in the received map switching command as the effective correction characteristic map.

Although the embodiments of this invention have been described above, this invention can further be implemented in other embodiments. For example, in the above-described embodiment, the control terminal 3 obtains the activation key by making the user input the activation key. However, it is also possible that the control terminal 3 obtains the activation key from a storage medium (USB memory, etc.) in which the activation key is stored or obtains the activation key from the management server 5 via a communication network such as the Internet.

As the positioning system used for the work vehicle 2, although a positioning system other than a point positioning system is used in the above-described embodiments, it is also possible to use a point positioning system.

Although the work vehicle is a tractor in the above-described embodiments, it is also possible that the work vehicle is a rice transplanter, combine, civil engineering/construction work device, snowplow, riding-type work machine, walking-type work machine, or the like.

Although the cases where this invention is applied to the control terminal 3 for controlling the work vehicle 2 are explained in the above-described embodiments, it is also possible to apply this invention to a control terminal for controlling an apparatus other than the work vehicle 2.

Although the embodiments of the present invention have been explained in detail, these are merely specific examples used for clarifying the technical contents of the present invention, and the interpretation of the present invention should not be limited to these specific examples and the scope of the present invention is limited only by the accompanying Claims.

### DESCRIPTION OF REFERENCE NUMERALS

1 app management system
2 work vehicle
3 control terminal
4 dealer PC
5 management server
6 communication network
7 reference station
8 positioning satellite
12 travel machine body
13 work machine
12 travel machine body
13 work machine
40 control unit
41 memory
71 position information calculation unit
72 inertial measurement device
73 wireless communication unit
74 operation display unit
75 storage unit
77 basic information storage unit
78 autonomous travel path storage unit
80 control unit
81 memory
82 path-generation/autonomous-travel control unit
83 permission/prohibition information registration processing unit
84 app use control unit
91 wireless communication unit
92 operation display unit
93 operation unit
94 storage unit
95 app storage unit
96 app use permission/prohibition information storage unit
97 autonomous travel path storage unit

## Claims

1. A control terminal (3) that is capable of having a wireless communication connection with an apparatus (2) having unique identification information and is provided with a plurality of applications for controlling the apparatus(2), the control terminal (3) comprising:
a storage unit (94) in which app use permission/prohibition information, which represents permission or prohibition of use of each of the plurality of applications in the apparatus(2), is stored in association with the identification information of the apparatus(2); and
an app use control unit (84) configured to receive the identification information of the apparatus from the apparatus (2) each time a wireless communication connection with the apparatus (2) is started, and to control use of the plurality of applications, based on the app use permission/prohibition information stored in the storage unit (94) in association with the received identification information.

2. The control terminal described in claim 1,
wherein the control terminal (3) is capable of controlling a plurality of apparatuses (2) having unique identification information, respectively,
wherein the app use permission/prohibition information, which are set in advance for the plurality of apparatuses(2), respectively, are stored in the storage unit (94) in association with the identification information of the apparatuses(2), and
wherein, each time a wireless communication connection with given one of the plurality of apparatuses(2) is started, the app use control unit (84) receives the identification information of the apparatus (2) from the apparatus (2) and controls use of the plurality of applications, based on the app use permission/prohibition information stored in association with the received identification information among the plurality of app use permission/prohibition information stored in the storage unit (94).

3. The control terminal (3) described in claim 1 or 2 further comprising a permission/prohibition information registration processing unit (83) configured to obtain for each of the apparatuses (2) an activation key, which is generated by encrypting information including the app use permission/prohibition information which represents permission or prohibition of use of each of the plurality of applications in the apparatus (2) and the identification information of the apparatus(2), to decrypt the obtained activation key, and to store the app use permission/prohibition information, which is obtained by the decryption, in the storage unit (94) in association with the identification information, which is obtained by the decryption.

## Patentansprüche

1. Steuerendgerät (3), das in der Lage ist, eine drahtlose Kommunikationsverbindung mit einer Einrichtung (2) mit eindeutigen Identifikationsinformationen aufzuweisen, und mit einer Vielzahl von Anwendungen zum Steuern der Einrichtung (2) versehen ist, wobei das Steuerendgerät (3) Folgendes umfasst:
eine Speichereinheit (94), in der in Verknüpfung mit den Identifikationsinformationen der Einrichtung (2) Appverwendungszulassungs-/-untersagungsinformationen gespeichert sind, die eine Zulassung oder eine Untersagung der Verwendung von jeder der Vielzahl von Anwendungen in der Einrichtung (2) repräsentieren; und
eine Appverwendungssteuereinheit (84), die dazu ausgelegt ist, die Identifikationsinformationen der Einrichtung jedes Mal von der Einrichtung (2) zu empfangen, wenn eine drahtlose Kommunikationsverbindung mit der Einrichtung (2) gestartet wird, und eine Verwendung der Vielzahl von Anwendungen auf Basis der in der Speichereinheit (94) in Verknüpfung mit den empfangenen Identifikationsinformationen gespeicherten Appverwendungszulassungs-/-untersagungsinformationen zu steuern.

2. Steuerendgerät nach Anspruch 1,
wobei das Steuerendgerät (3) in der Lage ist, eine Vielzahl von Einrichtungen (2) zu steuern, die jeweils eindeutige Identifikationsinformationen aufweisen,
wobei die Appverwendungszulassungs-/- untersagungsinformationen, die jeweils im Voraus für die Vielzahl von Einrichtungen (2) eingestellt werden, in der Speichereinheit (94) in Verknüpfung mit den Identifikationsinformationen der Einrichtungen (2) gespeichert sind, und
wobei jedes Mal, wenn eine drahtlose Kommunikationsverbindung mit einer gegebenen der Vielzahl von Einrichtungen(2) gestartet wird, die Appverwendungssteuereinheit (84) die Identifikationsinformationen der Einrichtung (2) von der Einrichtung (2) empfängt und auf Basis der Appverwendungszulassungs-/-untersagungsinformationen, die in Verknüpfung mit den empfangenen Identifikationsinformationen unter der Vielzahl von in der Speichereinheit (94) gespeicherten Appverwendungszulassungs-/-untersagungsinformationen gespeichert sind, eine Verwendung der Vielzahl von Anwendungen steuert.

3. Steuerendgerät (3) nach Anspruch 1 oder 2, das ferner eine Verarbeitungseinheit (83) zum Registrieren von Informationen zu einer Zulassung/Untersagung umfasst, die dazu ausgelegt ist, für jede der Einrichtungen (2) einen Aktivierungsschlüssel, der durch Verschlüsseln von Informationen erzeugt wird, die die Appverwendungszulassungs-/- untersagungsinformationen beinhalten, die eine Zulassung oder Untersagung der Verwendung von jeder der Vielzahl von Anwendungen in der Einrichtung (2) repräsentieren, und die Identifikationsinformationen der Einrichtungen (2) zu erhalten, um den erhaltenen Aktivierungsschlüssel zu entschlüsseln, und um die Appverwendungszulassungs-/-untersagungsinformationen, die durch die Entschlüsselung erhalten werden, in der Speichereinheit (94) in Verknüpfung mit den Identifikationsinformationen zu speichern, die durch die Entschlüsselung erhalten werden.

## Revendications

1. Terminal de commande (3) en mesure d'établir une connexion de communication sans fil avec un appareil (2) ayant des informations d'identification uniques et qui est pourvu d'une pluralité d'applications pour commander l'appareil (2), le terminal de commande (3) comprenant :
une unité de stockage (94) dans laquelle sont stockées, en association avec les informations d'identification de l'appareil (2), des informations d'autorisation/d'interdiction d'utilisation des applications qui représentent l'autorisation ou l'interdiction d'utilisation de chacune de la pluralité d'applications dans l'appareil (2) ; et
une unité de commande d'utilisation des applications (84) configurée pour recevoir les informations d'identification de l'appareil en provenance de l'appareil (2) à chaque fois qu'une connexion de communication sans fil avec l'appareil (2) est lancée, et pour commander l'utilisation de la pluralité d'applications sur la base des informations d'autorisation/d'interdiction d'utilisation des applications stockées dans l'unité de stockage (94) en association avec les informations d'identification reçues.

2. Terminal de commande selon la revendication 1,
dans lequel le terminal de commande (3) est en mesure de commander une pluralité d'appareils (2) ayant des informations d'identification uniques, respectivement,
dans lequel les informations d'autorisation/d'interdiction d'utilisation des applications, qui sont définies à l'avance pour la pluralité d'appareils (2), respectivement, sont stockées dans l'unité de stockage (94) en association avec les informations d'identification des appareils, et
dans lequel, à chaque fois qu'une connexion de communication sans fil avec un appareil donné de la pluralité d'appareils (2) est lancée, l'unité de commande d'utilisation des applications (84) reçoit les informations d'identification de l'appareil (2) en provenance de l'appareil (2), et commande l'utilisation de la pluralité d'applications sur la base des informations d'autorisation/d'interdiction d'utilisation des applications stockées en association avec les informations d'identification reçues parmi la pluralité d'informations d'autorisation/d'interdiction d'utilisation des applications stockées dans l'unité de stockage (94).

3. Terminal de commande (3) selon la revendication 1 ou 2, comprenant en outre une unité de traitement d'enregistrement d'informations d'autorisation/d'interdiction (83) configurée pour obtenir pour chacun des appareils (2) une clé d'activation qui est générée en chiffrant des informations comportant les informations d'autorisation/d'interdiction d'utilisation des applications qui représentent l'autorisation ou l'interdiction d'utilisation de chacune de la pluralité d'applications dans l'appareil (2) et les informations d'identification de l'appareil (2), pour déchiffrer la clé d'activation obtenue, et pour stocker les informations d'autorisation/d'interdiction d'utilisation des applications qui sont obtenues par le déchiffrement dans l'unité de stockage (94) en association avec les informations d'identification qui sont obtenues par le déchiffrement.
